# EUROPEAN PATENT SPECIFICATION

(11) **EP 3 447 869 B1**
(45) Date of publication and mention of the grant of the patent: **04.10.2023**
(21) Application number: 17187414.2
(22) Date of filing: 23.08.2017
(51) Int. Cl.: H02G 15/10, H02G 15/06, H02G 9/02

(54) **ELECTRICAL CONNECTOR ARRANGEMENT FOR CONNECTING A POWER CABLE AND METHOD FOR INSTALLING A SWITCHGEAR CABINET**
ELEKTRISCHE VERBINDERANORDNUNG ZUM VERBINDEN EINES STROMKABELS UND VERFAHREN ZUR INSTALLATION EINES SCHALTSCHRANKS
AGENCEMENT DE CONNECTEUR ÉLECTRIQUE POUR CONNECTER UN CÂBLE D'ALIMENTATION ET PROCÉDÉ D'INSTALLATION D'UNE ARMOIRE DE DISTRIBUTION

(43) Date of publication of application: 27.02.2019
(73) Proprietor: Tyco Electronics Raychem GmbH, 85521 Ottobrunn (DE)
(72) Inventor: SIMONSOHN, Thilo, 81735 München (DE); LEDERLE, Christoph, 83714 Miesbach (DE)
(74) Representative: Grünecker Patent- und Rechtsanwälte PartG mbB

(56) References cited:
- WO-A1-90/13933
- BE-A- 534 079
- CN-A- 103 151 630
- CN-U- 204 349 407
- DE-U1- 8 223 545
- KR-A- 20120 090 420
- US-A- 3 917 985
- US-A- 4 891 016
- US-A1- 2008 045 091

## Description

The present invention relates to an electrical connector arrangement for connecting a power cable to at least one second cable. The second cable may be a spacer element connecting a bushing of e. g. a transformer or a switchgear cabinet, and the invention further relates to a method for installing a switchgear cabinet. The connector arrangement according to the present invention may also advantageously be used in any other environment where cables are laid out in an angled manner, such as wind towers, industrial applications, or in underground tunnels.

Switchgear assemblies (also called switchgear cabinets in the following) include power switches, such as circuit breakers, transfer switches and the like, housed in metal cabinets together with sections of power buses between which the switches can be connected. With known switchgear assemblies, in an upper portion, there are mounted devices necessary for switching functions (current interruption, disconnecting, and grounding) as well as measuring transformers etc., and a bar system for their interconnection, while connection of power cables for incoming and outgoing current takes place in a lower portion. Conventionally, these power cables have to be accessible when installing the switchgear cabinet in order to attach the power cable connector elements. Moreover, due to the rather large minimal bending radius of the thick power cables, the cables have to be buried undesirably deep in the ground in order to allow the end region of the power cables to approach the switchgear cabinet vertically.

This procedure, however, is time consuming and expensive, and need high forces. Laying cables deeper into the ground causes additional excavation costs.

WO 90/13933 A1 discloses a plug-in connection in particular a sleeve for high-voltage plastic cables, comprising an electrical insulator fitting closely onto cable ends, said cable insulator having an electrically conducting stress-controlling body for screening cable conductor connecting elements received herein, and insulating body surrounding the stress-controlling body and an electrically conducting sheath surrounding the insulating body completely or partially. The insulator is provided with axial close-fitting passages to the space in the stress-controlling body for the cable conductor connecting elements. According to the present invention the cable conductor connecting elements comprise at least one plug part and at least one counter-plug part and means for mutually locking the plug part and the counter-plug part.

CN 103151630 A relates to a quick inserting and drawing cable connecting device. The quick inserting and drawing cable connecting device comprises an insulation main body, a first inserting connector, a second inserting connector and a connecting copper rod, wherein the insulation main body is formed by an inner layer and an outer layer, the inner layer is provided with insulation rubber, the outer layer is provided with semi-conductive rubber, and the inner layer and the outer layer are integrally combined; the connecting copper rod is distributed at the inner part of the insulation main body along a center line of the insulation main body, and two ends of the connecting copper rod respectively stretch to two end surfaces of the insulation main body; the first inserting connector is arranged at one end of the insulation main body and is used for electrically connecting a high-voltage flexible cable; the second inserting connector is arranged at the other end of the insulation main body and is used for electrically connecting an XLPE (Cross Linked Polyethylene) cable; and the first inserting connector and the second inserting connector are electrically connected through the connecting copper rod. The quick inserting and drawing cable connecting device provided by this document is a small-size device which is suitable for the connection of the high-voltage flexible cable and the XLPE cable, and thus the electric connection of the high-voltage flexible cable and the XLPE cable can be better completed on site.

DE 82 23 545 U1 discloses an angular plug-in fitting for connecting a shielded, plastic-insulated power cable to an electrical system provided with a housing having a lead-through, in particular to a transformer or a switchgear. The fitting has an insulating body made of elastic plastic, preferably silicone rubber. In a bore inside the insulating body, a metallic angled joint is arranged which has a connection option for the head of the cable and the system. In particular, two bores are provided for inserting matching bolts.

CN 204349407 U relates to a cable adapter comprising a left-right symmetric housing, a T-shaped joint side insulation layer, an inner conductor, a bypass cable joint side insulation layer, and a counterpoint self-locking device. The left-right symmetric housing is fixedly connected with the counterpoint self-locking device. The T-shaped joint side insulation layer and the bypass cable joint side insulation layer are disposed in the housing. The T-shaped joint side insulation layer and the bypass cable joint side insulation layer are connected together, and the inner conductor is disposed in the T-shaped joint side insulation layer and the bypass cable joint side insulation layer. The cable adapter is advantageous in that the on-site construction environment factors are taken into the consideration, the installation of the cable adapter is simple, and the carrying is easy, and then the cable in the ring main unit and the bypass cable can be respectively in a butt joint with the cable adapter quickly, and then the object of the fast, safe, and reliable use can be achieved.

KR 2012 0090420 A discloses a T type elbow connector unit which is provided to connect a high-pressure cable to a ground switch unit regardless of an operation method or the standard of an exchange target switch unit. An extension connection terminal 60 is inserted into inside T type elbow connector unit. An insulation housing unit combines with the T type elbow connector unit in order to cover with the outside of the extension connection terminal. A cable adaptor combines with the insulation housing unit. A connection terminal is arranged in the insulation housing unit and the inside cable adaptor. The connection terminal is detachably connects to the extension connect terminal.

BE 534 079 A relates to a distribution board for high voltages and with insulated bus bars. The insulated bus bars are constituted by repeated arches or hangers, each of which extends between the same two phases of neighboring fields.

US 3 917 985 A relates to a multi-purpose junction box and a flexible, easily removable high voltage underground type cable, which are used to connect a high voltage underground transmission line terminating in a pothead, to a power transformer. The pothead terminating high voltage underground transmission line terminates in a multi-purpose junction box with the central conductor of said transmission line being connected to electrical connecting means internal of the junction box. The flexible cable, in turn, connects the power transformer to the electrical connecting means internal of the multipurpose junction box.

US 4 891 016 A discloses an apparatus bushing which is fixed to a support wall or the wall of the apparatus housing and is electrically coupled to the apparatus within. A high-voltage cable is fixed to the single leg of a 600-Amp "T" connector and is supported only by a bracket extending from said apparatus bushing to one of the "T" legs. A removable pin-and-socket applied link member selectively couples the remaining "T" leg to the apparatus bushing, whereby power passes between the apparatus and high-voltage cable only when the link is present and isolates said cable and apparatus when it is absent. An operating assembly assures proper contact between the link sockets and the pins of the apparatus bushing extender and the 600-Amp "T" connector and can be arranged to positively separate the link assembly. The operating assembly can also be used to install and remove a cap assembly when the electrical link is not in place.

US 2008/045091 A discloses a latching mechanism for joining separable insulated connectors, which employs a plurality of finger contacts to create an interference fit with an electrode probe of an elbow connector. The electrode probe enters a cylindrical grouping of the plurality of finger contacts and a projection causes an interference fit between the finger contacts and the electrode probe. The finger contacts latch the connectors together and require a removal force greater than the latching force required to latch the connectors. The latching mechanism provides a multi-point current path between an elbow connector and a power transmission or distribution apparatus and provides operator feedback to indicate the latching of the mechanism.

The object underlying the present invention is to provide an electrical connector arrangement and a method for installing a switchgear cabinet with an improved performance and reliability, thereby overcoming, or at least substantially reducing the above mentioned problems and drawbacks.

This object is solved by the subject matter of the independent claims. Advantageous embodiments of the present invention are the subject matter of the dependent claims.

The present invention is based on the idea to provide an intermediate connector that is angled by approximately 90° and can be installed on the pre-laid power cable. According to an advantageous embodiment, a short cable piece that connects to the switchgear bushings can be inserted into this intermediate connector. Any other second cable may of course also be attached to a power cable using the intermediate connector according to the present invention.

Advantageously, the power cable can now be laid only little below the ground level, for instance 200 mm, rather than about 1 m as with conventional arrangements. Furthermore, the power cable may be laid first and the switchgear cabinet can be brought on site any time later. The connection to the vertical second cable can be made without having direct access to the cable and to the pre-installed electrical connector arrangement.

In particular, according to the present invention, an electrical connector arrangement for connecting a power cable to at least one second cable comprises an angled intermediate connector, wherein the angled intermediate connector comprises at least one first arm and at least one second arm, the first arm and the second arm enclosing an angle with a nonzero value different from 180°. The first arm comprises a first cable connector element for receiving a matching second cable connector element attached to the power cable, and the second arm comprises a first sliding-contact connector element that is to be connected to a matching second sliding-contact connector element attached to the second cable, the first cable connector element and the first sliding-contact connector element being electrically connected with each other.

The angled intermediate connector further comprises an electrically insulating cover for protecting the first cable connector element and the first sliding-contact connector element.

Due to having an angle far from being straight, such the connection bodies cannot be slid over like this is known for all standard (straight) cable joints. Only one cable can be slid over and the connector being tightly screwed. The second cable must be pushed-in. The connection to deal with the current, e.g. 630 A, must be generated in self-installing manner. For this there are many options for slidable contact systems.

The first sliding-contact connector element and the second sliding-contact connector element in a finally mounted state are fixed at each other by means of a self-locking mechanism. Such a self-locking mechanism has the advantage that the site of the electrical connection does not have to be accessible for attaching fixing means such as screws or the like. The self-locking mechanism may for instance comprise at least one slidable connector element arranged at the first or second sliding-contact element for interacting with at least one matching groove arranged at the second or first sliding-contact connector element, respectively.

According to an advantageous embodiment, self-locking means are provided which are designed to be destroyable with manual forces and/or tools, so that the cable will not be harmed when disassembling the connection.

According to an advantageous embodiment of the present invention, the first arm and the second arm enclose an angle of about 90°. However, it is clear for a person skilled in the art that any other suitable angle may also be chosen, for instance in the case where the power cables are not installed horizontally.

Advantageously, a spacer element is provided having a spacer cable that forms said second cable and connecting the first sliding-contact connector element with a switchgear cabinet. This spacer cable may for instance be formed from an insulated piece of power cable having the adequate length to connect the second self-locking connector element to a bushing at the switchgear cabinet.

According to an advantageous embodiment of the present invention, the self-locking mechanism comprises at least one slidable connector element arranged at the first or second self-locking connector element for interacting with at least one matching groove arranged at the second or first self-locking connector element, respectively. The spring connector element may for instance be formed by an electrically conductive BalSeal^{®} coil spring or by an annular torsion spring, such as a so-called multilam spring. Moreover, the electrically conductive spring may also be used for the electrical contact only, and may interact with the respective other self-locking connector element without an additional groove.

According to the invention, the electrical connector arrangement is provided with a self-locking mechanism. The self-locking mechanism for instance comprises at least one thermoplastic compressible fixing ring arranged at the second self-locking connector element for interacting with a matching second groove arranged at the first self-locking connector element. According to an advantageous embodiment of the present invention, the self-locking mechanism comprises a tube with a slit. Such a tube is reduced in its radial dimension through the insertion in axial direction. In other words, the self-locking fixing ring is being radially or circumferentially compressed. This arrangement has the advantage that it can ensure a safe locking of the spacer at the intermediate connector, but at the same time allows for a forced removal of the spacer by destroying the thermoplastic fixing ring in case of a necessary repair. Moreover, by providing a sufficiently long axial dimension of the groove, a larger tolerance can be introduced regarding the length of the spacer cable. Consequently, an operator can comfortably prepare the spacer cable off site and will meet the tolerances for its length much more easily.

According to an advantageous embodiment of the present invention, the electrically insulating cover of at least one of the first arms has an opening for providing access to said first cable connector element. Such an access opening may be needed for providing a life access point to the cable. Advantageously, the access point is located directly at the first cable connector element.

According to the invention, the first sliding-contact connector element is a self-locking connector bushing, and said second sliding-contact connector element is a self-locking bolt.

According to the invention, said first cable connector element is a screw connector for attaching a cable connector lug which forms the second cable connector element. Thereby, the more economic screw and lug connection is combined with the more costly, but self-contacting sliding-contact connector elements.

The self-locking connector bolt may be arranged so that a longitudinal central axis of the self-locking connector bolt intersects an end portion of the cable connector lug. This geometry offers the advantage of being a particularly stable and rigid construction.

Alternatively, the screw connector may be arranged so that it is distanced apart from the longitudinal central axis of the self-locking connector bolt. This embodiment is particularly advantageous if a life access point is to be provided at the location of the screw connector. Moreover, this design also reduces the amount of parts that extend above ground level before the spacer is installed.

In order to protect the connector arrangement inside the ground, a protective housing may be provided and the angled intermediate connector is encased inside the e. g. resin-filled protective housing after having attached the intermediate connector to said power cable. Advantageously, this protective housing also holds the intermediate connector in a position suitable for mounting the switchgear cabinet. For instance, mounting clips can be arranged inside the housing for fixing the intermediate connector. Usually, a plurality of power cables is to be connected to the switchgear cabinet and the housing has a plurality of defined mounting locations for aligning the plurality of intermediate connectors at the required distances, depending on the various designs of switchgear cabinets.

This housing, which also can be referred to as a box, is used for burying the system in the ground and can be manufactured from a thermoplastic material. As mentioned, it may comprise parts to allow orientation and fixing of the electrical connector arrangement. In order to adjust to different designs of the switchgear cabinet, the box and its internal parts can allow for different distances between the center lines of the connectors according to the different distances between the centerlines of the bushings inside differently designed switchgear cabinets. The box may be filled with a resin and/or may have sealing means at the cable entry points. The sealing means can comprise heat shrink sleeves, cold shrink sleeves, mastics, foam parts, or the like.

Of course, the electrically insulating cover may also only be protected by a heat shrink or cold shrink sleeve without using a housing box. A protective sheath or housing advantageously protects against abrasion and degradation any electrically conductive outer layer that is applied to the cover. It also prevents puncturing and deformation and reduces water ingress.

The present invention further relates to a method for installing a switchgear cabinet as defined in claim 8, the method comprising the following steps:
providing a power cable below ground with a second cable connector element attached to the cable;
attaching an angled intermediate connector to the second cable connector element, wherein the angled intermediate connector comprises at least one first arm and at least one second arm, the first arm and the second arm enclosing an angle with a nonzero value, and wherein the first arm comprises a first cable connector element for receiving the matching second cable connector element attached to the cable, and the second arm comprises a first sliding-contact connector element, the first cable connector element and the first sliding-contact connector element being electrically connected with each other, and wherein the angled intermediate connector further comprises an electrically insulating cover for protecting the first cable connector element and the first sliding-contact connector element,
attaching at least one second cable having a second sliding-contact connector element so that the first and second sliding-contact connectors are electrically connected to each other.

The second cable may be formed as a spacer element that comprises an electrically conductive lead that joins the second sliding-contact connector element with the bushing of a switchgear cabinet. Advantageously, this method allows for the power cable being connected and installed under ground level any time before the switchgear cabinet is mounted.

Advantageously, the first arm and the second arm enclose an angle of about 90°. However, as already mentioned above, smaller or larger angles may also be chosen.

According to the present invention, said second sliding-contact connector element of the second cable is inserted into the first sliding-contact connector element in a direction orthogonal to a longitudinal axis of the power cable. This facilitates the mounting process and allows for an efficient transfer of the applied mounting forces into the self-locking mechanism.

As already mentioned above, the method may further comprise the step of encasing the angled intermediate connector inside an at least partly resin-, gel-, or oil-filled protective housing after having attached the intermediate connector to said power cable. The method may also include the step of environmentally protecting the angled intermediate connector with a sleeve installed by heat shrink or cold applied techniques or by taping.

The present invention advantageously is used with high-voltage power cables that are installed below ground, in particular for 42 kV applications. The term "high-voltage" as used in the following is intended to relate to voltages above approximately 1 kV. In particular, the term high-voltage is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint. The present invention is also applicable to the so-called "low-voltage", LV, range that relates to voltages below 1 kV.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Further features and advantages will become apparent from the following more particular description of the various embodiments of the invention, as illustrated in the accompanying drawings, in which like references refer to like elements, and wherein:
- **FIG. 1**: is a schematic sectional representation of an electrical connector arrangement according to a first embodiment of the present invention;
- **FIG. 2**: is a schematic sectional representation of an electrical connector arrangement according to a further embodiment of the present invention;
- **FIG. 3**: is a schematic sectional representation of an electrical connector arrangement according to a further embodiment of the present invention;
- **FIG. 4**: is a schematic sectional representation of an electrical connector arrangement according to a further embodiment of the present invention.

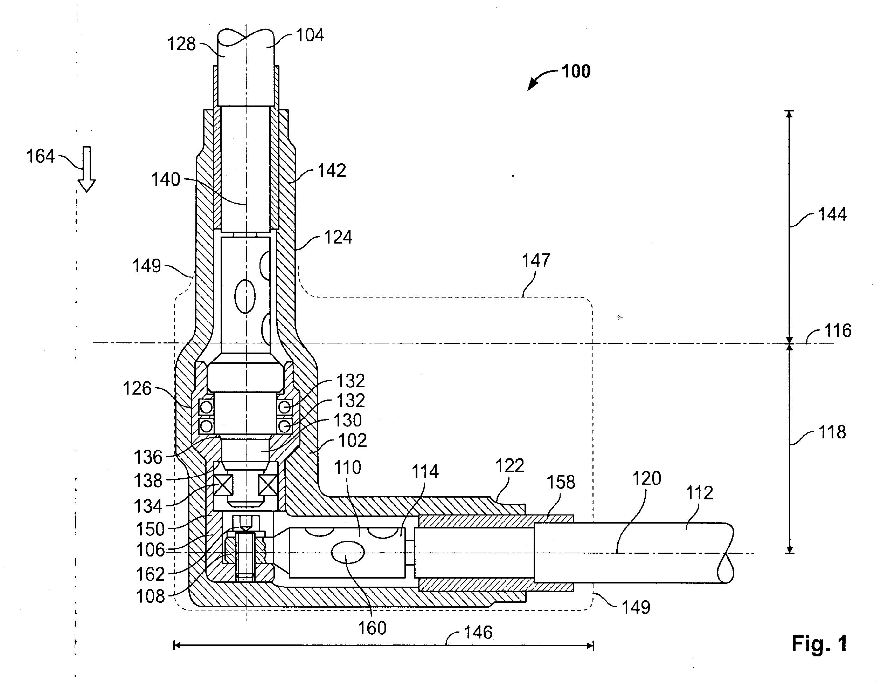

The present invention will now be further explained referring to the Figures, and firstly referring to Figure 1. Fig. 1 schematically illustrates an electrical connector arrangement 100 according to a first advantageous embodiment of the present invention. The connector arrangement 100 comprises an angled intermediate connector 102 and a spacer element 104. The intermediate connector element 102 has a screw connector 106 which is to be connected to the palm 108 of a cable connector lug 110. A power cable 112 that is connected to a switching cabinet (not shown in the Figures) is stripped of its outer layers and inserted into the barrel 114 of the cable connector lug 110.

According to the present invention, the cable 112 is installed under ground level (reference numeral 116) with a relatively short distance 118. The distance 118 may for instance be in the range of about 200 mm. The longitudinal axis 120 of the cable is essentially horizontal, corresponding to a 90° angle between the first and second arms 122 and 124 of the intermediate connector 102. However, it is clear for a person skilled in the art, that the screw connector portion 106 may also be formed to allow the cable connector lug 110 being inserted under another angle than 90°, for instance 70° or 110°. Hence, also cables that are installed at a shorter or longer distance 118 can be accommodated for. Advantageously, the electrically insulating cover 142 (also called "body") can accommodate for these angles different from 90° by its elastic material and design, thus avoiding multiple molded parts.

According to the present invention, the angled intermediate connector 102 further comprises a self-locking connector element 126 for attaching the spacer element 104. According to the embodiment shown in Fig. 1, the spacer element 104 comprises a piece of spacer cable 128 which essentially has the same structure as the power cable 112 and is connected to a matching second self-locking connector element 130.

According to the embodiment shown in Fig. 1, the first self-locking connector element 126 is formed as a socket, whereas the second self-locking connector element 130 is formed as a bolt. For establishing the electrical contact between the first and the second self-locking connector elements 126, 130, the first self locking connector element 126 is provided with one or two BalSeal^{®} springs 132 which are embedded within notches at the outer circumference of the first self-locking connector element 126. When the second self-locking connector element 130 is inserted into the first self-locking connector element 126, the springs 132 are pressed against an outer surface of the second self-locking connector element 130 and establish an electrical contact around the circumference of the connector elements 126, 130. It is clear for a person skilled in the art that any other annular electrically conductive springs may also be used for establishing an optimal electrical contact, for instance annular torsion springs which are known as multilam springs. The springs or the like can also be embedded within notches in the connector element 130.

According to the embodiment shown in Fig. 1, an additional self-locking fixing means 134 is provided at the second self-locking connector element 134 for fixing the two self-locking connector elements at each other. For instance, the self locking fixing means 134 may comprise a thermoplastic ring which is provided with an incision so that it is radially compressible. When mounting the first self-locking connector element 130, the fixing ring is compressed by the tapered region 136 and then expands within the groove 138. In the finally mounted state of the spacer 104, the ring 134 holds the spacer 104 in its position, so that the spacer 104 can only be removed with excessive force. Such high forces may be applied if the spacer 104 has to be removed in case a replacement of the spacer 104 is needed.

Furthermore, the groove 138 extends along a longitudinal axis 140 of the first self-locking connector element 126 with a larger distance than actually needed for the fixing ring 134. Thus, a tolerance is provided for the position of the spacer element 104 along the axis 140, thus accommodating for tolerances in the length of the spacer element 104.

Instead of the thermoplastic fixing ring 134, also a further BalSeal^{®} spring or multilam metal spring can be provided.

For protecting the electrically conductive parts of the intermediate connector 102, the intermediate connector 102 further comprises an electrically insulating cover 142. This cover 142 may for instance be formed from an elastomeric material as this is generally known for high-voltage accessories. Moreover, the electrically insulating cover 142 may also be coated or overmolded with a conductive layer as this is known to a person skilled in the art.

For enhancing the electrical conductivity, the first cable connector element 106 and the first self-locking connector element 126 are formed as one single integral metal part 148.

Advantageously, the metal part 148 is coated with silver at least in the contact areas or any other coating material according to the requirements of the particular contact system 132.

In order to meet the requirements for high-voltage connectors, the cover 142 needs to have specified dimensions. For instance, for a 42 kV power cable, the second arm 124 reaches above ground level 116 by a distance 144 that amounts to about 200 mm. The horizontal length 146 below ground may for instance amount to 350 mm. However, it is clear for a person skilled in the art that these particular values are not essential for the principles according to the present invention.

In order to protect the connector arrangement inside the ground, an optional protective housing 147 may be provided and the angled intermediate connector 102 is encased inside the e. g. resin-filled protective housing 147 after having attached the intermediate connector 102 to said power cable. Advantageously, this protective housing 147 also holds the intermediate connector 102 in a position suitable for mounting the switchgear cabinet. For instance, mounting clips (not shown in the Figure) can be arranged inside the housing 147 for fixing the intermediate connector 102. Usually, a plurality of power cables is to be connected to the switchgear cabinet and the housing 147 has a plurality of defined mounting locations for aligning the plurality of intermediate connectors at the required distances, depending on the various designs of switchgear cabinets.

This housing 147, which also can be referred to as a box, is used for burying the system in the ground and can be manufactured from a thermoplastic material. As mentioned, it may comprise parts to allow orientation and fixing of the electrical connector arrangement. In order to adjust to different designs of the switchgear cabinet, the box 147 and its internal parts can allow for different distances between the center lines of the connectors according to the different distances between the centerlines of the bushings inside differently designed switchgear cabinets. The box 147 may be filled with a resin and/or may have sealing means at the cable entry points 149. The sealing means can comprise heat shrink sleeves, cold shrink sleeves, mastics, foam parts, or the like.

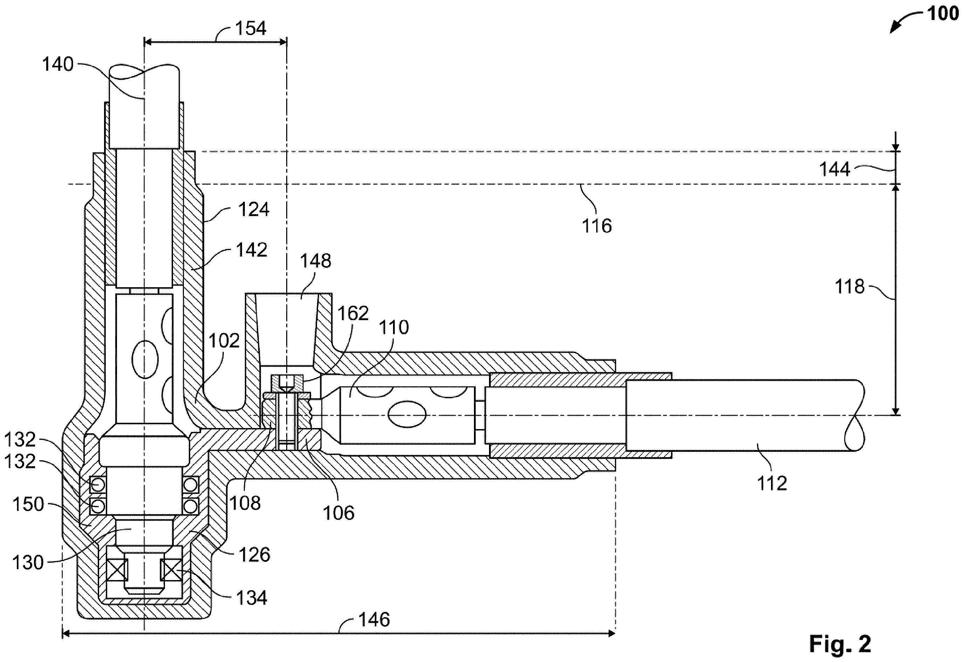

Fig. 2 shows an electrical connector arrangement 100 according to a further advantageous embodiment of the present invention.

Essentially, the intermediate connector 102 differs from the embodiment shown in Fig. 1 in that the first self-locking connector element 126 and the screw connector 106 are interconnected at a different location. By attaching the screw connector 106 at a location closer to the ground level 116, the angled intermediate connector 102 can be made more compact and the second arm 124 extends out of the ground level 116 by a much smaller distance compared to distance 144 of Fig. 1.

Furthermore, according to the embodiment shown in Fig. 2, an opening 148 is provided in the electrically insulating cover 142 for two purposes. One is to allow a screw connection of the lug 110 by a screw 162. Another purpose is to provide a life access point to the cable connector lug 110. Such a life access point may serve safety purposes or may receive a testing plug for measurement purposes (not shown in the Figures).

If the access is not needed, a fitting plug (not shown in the Figures) can be provided for closing the opening 148. As already mentioned above, the screw connector 106 does not necessarily have to include a 90° angle with the axis 140. Depending on the inclination of the power cable 112, also a larger or smaller angle can be provided.

The first cable connector element 106 and the first self-locking connector element 126 are formed as one single integral metal part 150. Advantageously, the metal part 150 is coated with silver at least in the contact areas.

All other features of the electrical connector arrangement 100 are the same as explained with reference to Fig. 1.

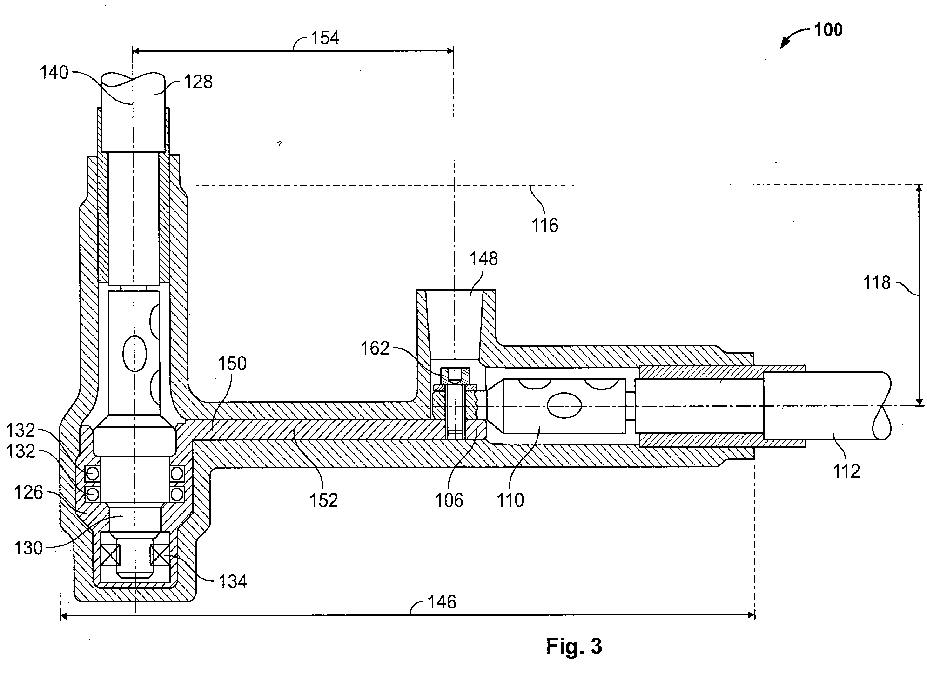

If it is required that the life access opening 148 is distanced further away from the longitudinal axis 140 of the first self-locking connector element 126, the screw connector 106 can be connected to the first self-locking connector element 126 by means of an elongated connecting bar 152. This particular embodiment is shown in Fig. 3. Introducing the increased distance 154 of course leads to a longer dimension 146 of the horizontal arm 122 of the intermediate connector 102.

For instance, the horizontal arm 122 has an extended length 146 of about 700 mm, assuming the distance 145 between the opening 148 and the axis 140 being 300 mm. As mentioned above, however, these actual dimensions are of course only exemplary and not relevant for the ideas according to the present invention.

All other features of the electrical connector arrangement 100 are the same as explained with reference to Fig. 1 and 2.

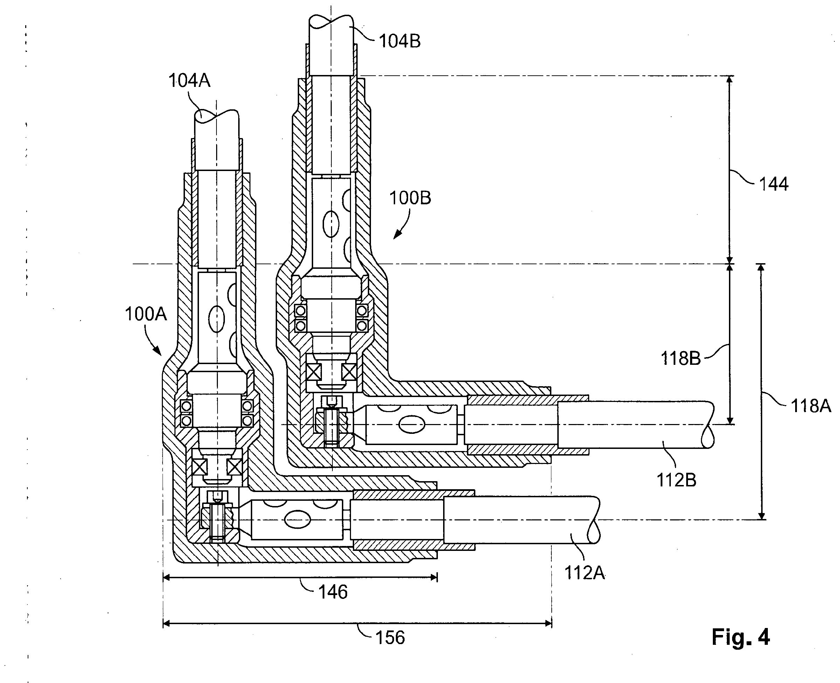

A further embodiment of the present invention will now be explained with reference to Fig. 4. Some switching cabinets also have so-called coupling connectors that are arranged adjacently, so that two spacer cables 128 have to be arranged in close proximity. Fig. 4 illustrates an arrangement of two connector arrangements 100A, 100B which are arranged to provide spacers 104A, 104B to be connected to a base connector and a coupling connector (not shown in the Figures).

Due to the staggered arrangement of the two connector arrangements100A, 100B, the cable 112A has to be buried deeper than cable 112B at least in a region close to the switchgear cabinet. Distance 118A may for instance be 320 mm, while maintaining a distance of 200 mm for distance 118B. When arranging two identical electrical connector arrangements 100A, 100B in the nested configuration shown in Fig. 4, a maximum length 156 in a horizontal direction will be around 500 mm, assuming a distance 146 amounting to 350 mm as explained above.

Although the Figures only show elbow-shaped connector arrangements with one first arm and one second arm, it is clear for a person skilled in the art, that also additional arms may branch out in the horizontal as well as the vertical direction.

The assembly of an electrical connector arrangement 100 according to the present invention will now be explained, referring again to all the Figures 1 to 4.

In the first step, the cable 112 which is laid underground is provided with an adapter 158 and with a cable connector lug 110. To this end, the insulation of the cable is removed and a protective cable adapter 158 is assembled. The barrel 114 of the cable connector lug is attached by means of bolts as this is known in the art. Alternatively, a crimp process is used to establish the mechanical and electrical connection.

Next, the cable is inserted into the angled intermediate connector 102. The screw connector 106 is attached to the palm 108 of the cable connector lug 110. As can be seen from the Figures, the screw 162 is accessible from above as long as the spacer 104 is not yet inserted. The cable 112 with the attached intermediate connector 102 is preferably arranged inside a box-shaped housing 147 which stabilizes the position of the intermediate connector 102. In this position, the cable 112 and the intermediate connector 102 may remain as long as needed before the switchgear cabinet is installed.

By providing other angles than 90° between the first arm and the second arm 122, 124 the electrical connector arrangement may deal with deviations of the angle of the incoming underground cables. For instance, the cable may come from a location closer than 200 mm or further away than 200 mm from the ground level 116. Accordingly, the angled intermediate connector 102 may provide a connection under angles that differ by 5° to 30° from the horizontal axis.

In case the angled intermediate connector 102 is arranged inside a protective housing 147, a next step may be performed that consists of at least partly filling the housing with a resin, or a gel, or oil.

Before or after the switchgear cabinet is mounted, a piece of spacer cable 128 is cut to length and provided at one end with a connector as needed for connecting to the switchgear cabinet (not shown in the Figures) and at the other end with an adapter and the second self-locking connector element 130 according to the present invention.

In a next step, the spacer 104 with the adapter and second self-locking connector element 130 is inserted into the electrically insulating cover 142 which is forcefully expanded to receive the adapter and, depending on the size, also the second self-locking connector element 130. The second self-locking connector element 130 is moved in a direction along the arrow 164. The self locking fixing ring 134 snaps into the groove 138 at the first self-locking connector element 126. In order to compensate for any tolerances along the longitudinal axis 140, the fixing ring 134 may remain movable along the direction 164 inside the groove 138. The electrical contact is mainly established by means of the electrically conductive springs 132.

Finally, the other end of the spacer 104 is connected to a bushing of the switchgear cabinet (not visible in the Figures).

The concept according to the present invention reduces excavation costs, as the cables are laid with a low distance below ground level. Furthermore the present invention allows for much larger tolerances for the preparation of the vertical connection cable and facilitates cable preparation and the installation of the elbows apart from the switchgear cabinet. With the additional components explained above a life axis point can be created that enhances safety and reliability.

### REFERENCE NUMERALS

| **Reference Numeral** | **Description** |
|---|---|
| 100, 100A, 100B | Electrical connector arrangement |
| 102 | Angled intermediate connector |
| 104, 104A, 104B | Spacer element |
| 106 | Screw connector, first cable connector element |
| 108 | Palm |
| 110 | Cable connector lug, second cable connector element |
| 112, 112A, 112B | Power cable |
| 114 | Barrel |
| 116 | Ground level |
| 118 | Distance below ground |
| 120 | Longitudinal axis |
| 122 | First arm |
| 124 | Second arm |
| 126 | First slidinq-contact connector element |
| 128 | Second cable; spacer cable |
| 130 | Second sliding-contact connector element |
| 132 | BalSeal^{®} spring |
| 134 | Fixing ring |
| 136 | Tapered region |
| 138 | Groove |
| 140 | Longitudinal axis of first self-locking connector element |
| 142 | Electrically insulating cover |
| 144 | Distance |
| 146 | Distance |
| 147 | Housing |
| 148 | Opening in electrically insulating cover |
| 149 | Cable entry point |
| 150 | Metal part |
| 152 | Connectinq bar |
| 154 | Distance |
| 156 | Maximum length in horizontal direction |
| 158 | Cable adapter |
| 160 | Bolt |
| 162 | Screw |
| 164 | Connecting direction |

## Claims

1. Electrical connector arrangement for connecting a power cable (112) to at least one second cable (128), the electrical connector arrangement (100) comprising:
an angled intermediate connector (102), wherein the angled intermediate connector (102) comprises at least one first arm (122) and at least one second arm (124), the first arm (122) and the second arm (124) enclosing an angle with a nonzero value different from 180°,
wherein the first arm (122) comprises a first cable connector element (106) and a matching second cable connector element (110) attachable to the power cable (112), and
the second arm (124) comprises a first sliding-contact connector element (126) that is formed by a self-locking connector bushing and a matching second sliding-contact connector element (130) formed by a self-locking bolt and attachable to the second cable (128), the first cable connector element (106) and the first sliding-contact connector element (126) being electrically connected with each other, and
wherein the angled intermediate connector (102) further comprises an electrically insulating cover (142) for protecting the first cable connector element (106) and the first sliding-contact connector element (126),
wherein the second cable connector element is formed as a cable connector lug (110) with a palm (108) as end portion, said first cable connector element is a screw connector (106) and is formed as one single integral metal part (150) with the self-locking first sliding contact connector element (126) for attaching, by means of a screw (162), the palm (108) of the cable connector lug (110) which forms the second cable connector element, so that the cable connector lug (110) encloses with a longitudinal central axis (140) of the self-locking connector bolt an angle with a nonzero value different from 180°, and
wherein said self-locking connector bolt (130) is in a state finally mounted to the self-locking first sliding-contact connector element (126) arranged so that the longitudinal central axis (140) of the self-locking connector bolt (130) intersects the palm (108) of the cable connector lug (110), or
wherein the screw connector (106) is arranged so that it is distanced apart from the longitudinal central axis (140) of the self-locking connector bolt (130) in the state finally mounted to the self-locking first sliding-contact connector element (126).

2. Electrical connector arrangement according to claim 1, wherein the first sliding-contact connector element (126) and the second sliding-contact connector element (130) in the finally mounted state are fixed at each other by means of a self-locking mechanism (134).

3. Electrical connector arrangement according to claim 2, wherein the self-locking mechanism (134) comprises at least one slidable connector element (132) arranged at the first or second sliding-contact element for interacting with at least one matching groove arranged at the second or first sliding-contact connector element, respectively.

4. Electrical connector arrangement according to one of the preceding claims, further comprising a spacer element (104) having a spacer cable (128) that forms said second cable, wherein the spacer cable (128) is connected to the first sliding-contact connector element (126) and is connectable with a switchgear cabinet.

5. Electrical connector arrangement according to claim 1, wherein the first arm (122) and the second arm (124) enclose an angle of about 90°.

6. Electrical connector arrangement according to claim 2, wherein the self-locking mechanism comprises at least one thermoplastic radially compressible fixing ring (134) arranged at the second self-locking connector element (130) for interacting with a matching second groove (138) arranged at the first self-locking connector element (126).

7. Electrical connector arrangement according to one of the preceding claims, wherein at at least one of the first arms (122) the electrically insulating cover has an opening (148) for providing access to said first cable connector element (106).

8. Method for installing a switchgear cabinet, using an electrical connector arrangement (100) according to one of the claims 1 to 7, the method comprising the following steps:
providing the power cable (112) below ground with the second cable connector element (110) attached to the cable;
attaching the angled intermediate connector (102) to the second cable connector element (110),
attaching at least one second cable (128) having the second sliding-contact connector element (130) so that the first and second sliding-contact connector elements are electrically connected to each other.

9. Method according to claim 8, wherein wherein the electrical connector arrangement (100) further comprises a spacer element (104) having a spacer cable (128) that forms said second cable and connecting the first sliding-contact connector element (126) with a switchgear cabinet.

10. Method according to one of the claims 8 to 9, when using the electrical connector arrangement (100) according to claims 2, 3, or 6, wherein the self-locking mechanism comprises at least one slidable connector element (132) arranged at the first or second self-locking connector element for interacting with at least one matching groove arranged at the second or first self-locking connector element, respectively.

11. Method according to one of the claims 8 to 10, wherein said second self-locking connector element (130) of the spacer element is inserted into the first self-locking connector element (126) in a direction (164) orthogonal to a longitudinal axis of the power cable (112).

12. Method according to one of the claims 8 to 11, further comprising the step of encasing the angled intermediate connector (102) inside a protective housing (147) after having attached the intermediate connector to said power cable, and/or the step of environmentally protecting the angled intermediate connector (102) with a sleeve installed by heat shrink or cold applied techniques or by taping.

## Patentansprüche

1. Elektrische Verbinderanordnung zum Verbinden eines Stromkabels (112) mit wenigstens einem zweiten Kabel (128), wobei die elektrische Verbinderanordnung (100) umfasst:
einen abgewinkelten Zwischenverbinder (102), wobei der abgewinkelte Zwischenverbinder (102) wenigstens einen ersten Arm (122) und wenigstens einen zweiten Arm (124) umfasst, wobei der erste Arm (122) und der zweite Arm (124) einen Winkel mit einem von 180° verschiedenen Wert ungleich Null einschließen,
der erste Arm (122) ein erstes Kabel-Verbinderelement (106) sowie ein passendes zweites Kabel-Verbinderelement (110) umfasst, das an dem Stromkabel (112) angebracht werden kann, und
der zweite Arm (124) ein erstes Gleitkontakt-Verbinderelement (126), das durch eine selbstverriegelnde Verbinderbuchse gebildet wird, sowie ein passendes zweites Gleitkontakt-Verbinderelement (130) umfasst, das durch einen selbstverriegelnden Bolzen gebildet wird und an dem zweiten Kabel (128) angebracht werden kann, wobei das erste Kabel-Verbinderelement (106) und das erste Gleitkontakt-Verbinderelement (126) elektrisch miteinander verbunden sind, und
der abgewinkelte Zwischenverbinder (102) des Weiteren eine elektrisch isolierende Abdeckung (142) zum Schützen des ersten Kabel-Verbinderelementes (106) und des ersten Gleitkontakt-Verbinderelementes (126) umfasst,
wobei das zweite Kabel-Verbinderelement als ein Kabelverbinder-Schuh (110) mit einem Blatt (palm) (108) als Endabschnitt ausgebildet ist,
das erste Kabel-Verbinderelement ein Schraubverbinder (106) ist und als ein integrales Metallteil (150) mit dem selbstverriegelnden ersten Gleitkontakt-Verbinderelement (126) ausgebildet ist, um mittels einer Schraube (162) das Blatt (108) des Kabelverbinder-Schuhs (110), der das zweite Kabel-Verbinderelement bildet, so anzubringen, dass der Kabelverbinder-Schuh (110) mit einer Längs-Mittelachse (140) des selbstverriegelnden Verbinderbolzens einen Winkel mit einem von 180° verschiedenen Wert ungleich Null einschließt, und
wobei der selbstverriegelnde Verbinderbolzen (130) in einem Zustand, in dem er endgültig an dem selbstverriegelnden ersten Gleitkontakt-Verbinderelement (126) montiert ist, so angeordnet ist, dass die Längs-Mittelachse (140) des selbstverriegelnden Verbinderbolzens (130) das Blatt (108) des Kabelverbinder-Schuhs (110) schneidet, oder
wobei der Schraubverbinder (106) so angeordnet ist, dass er von der Längs-Mittelachse (140) des selbstverriegelnden Verbinderbolzens (130) in dem Zustand beabstandet ist, in dem er endgültig an dem selbstverriegelnden ersten Gleitkontakt-Verbinderelement (126) montiert ist.

2. Elektrische Verbinderanordnung nach Anspruch 1, wobei das erste Gleitkontakt-Verbinderelement (126) und das zweite Gleitkontakt-Verbinderelement (130) in dem endgültig montierten Zustand mittels eines selbstverriegelnden Mechanismus (134) aneinander befestigt sind.

3. Elektrische Verbinderanordnung nach Anspruch 2, wobei der selbstverriegelnde Mechanismus (134) wenigstens ein verschiebbares Verbinderelement (132) umfasst, das an dem ersten oder dem zweiten Gleitkontakt-Element angeordnet ist und mit wenigstens einer passenden Nut zusammenwirkt, die an dem zweiten bzw. ersten Gleitkontakt-Verbinderelement angeordnet ist.

4. Elektrische Verbinderanordnung nach einem der vorangehenden Ansprüche, die des Weiteren ein Abstandshalte-Element (104) mit einem Abstandshalte-Kabel (128) umfasst, das das zweite Kabel bildet, wobei das Abstandshalte-Kabel (128) mit dem ersten Gleitkontakt-Verbinderelement (126) verbunden ist und mit einem Schaltschrank verbunden werden kann.

5. Elektrische Verbinderanordnung nach Anspruch 1, wobei der erste Arm (122) und der zweite Arm (124) einen Winkel von ungefähr 90° einschließen.

6. Elektrische Verbinderanordnung nach Anspruch 2, wobei der selbstverriegelnde Mechanismus wenigstens einen thermoplastischen, radial komprimierbaren Fixierring (134) umfasst, der an dem zweiten selbstverriegelnden Verbinderelement (130) angeordnet ist und mit einer passenden zweiten Nut (138) zusammenwirkt, die an dem ersten selbstverriegelnden Verbinderelement (126) angeordnet ist.

7. Elektrische Verbinderanordnung nach einem der vorangehenden Ansprüche, wobei wenigstens einer der ersten Arme (122) der elektrisch isolierenden Abdeckung eine Öffnung (148) aufweist, die Zugang zu dem ersten Kabel-Verbinderelement (106) schafft.

8. Verfahren zum Installieren eines Schaltschranks unter Verwendung einer elektrischen Verbinderanordnung (100) nach einem der Ansprüche 1 bis 7, wobei das Verfahren die folgenden Schritte umfasst:
Bereitstellen des Stromkabels (112) unter der Erde, wobei das zweite Kabel-Verbinderelement (110) an dem Kabel angebracht ist;
Anbringen des abgewinkelten Zwischenverbinders (102) an dem zweiten Kabel-Verbinderelement (110),
Anbringen wenigstens eines zweiten Kabels (128), das das zweite Gleitkontakt-Verbinderelement (130) aufweist, so dass das erste und das zweite Gleitkontakt-Verbinderelement elektrisch miteinander verbunden sind.

9. Verfahren nach Anspruch 8, wobei die elektrische Verbinderanordnung (100) des Weiteren ein Abstandshalte-Element (104) mit einem Abstandshalte-Kabel (128) umfasst, das das zweite Kabel bildet und das erste Gleitkontakt-Verbinderelement (126) mit einem Schaltschrank verbindet.

10. Verfahren nach einem der Ansprüche 8 bis 9, wenn die elektrische Verbinderanordnung (100) nach Anspruch 2, 3 oder 6 eingesetzt wird, wobei der selbstverriegelnde Mechanismus umfasst:
wenigstens ein verschiebbares Verbinderelement (132), das an dem ersten oder dem zweiten selbstverriegelnden Verbinderelement angeordnet ist und mit wenigstens einer passenden Nut zusammenwirkt, die an dem zweiten bzw. dem ersten selbstverriegelnden Verbinderelement angeordnet ist.

11. Verfahren nach einem der Ansprüche 8 bis 10, wobei das zweite selbstverriegelnde Verbinderelement (130) des Abstandshalte-Elementes in das erste selbstverriegelnde Verbinderelement (126) in einer Richtung (164) orthogonal zu einer Längsachse des Stromkabels (112) eingeführt wird.

12. Verfahren nach einem der Ansprüche 8 bis 11, das des Weiteren den Schritt des Einschließens des abgewinkelten Zwischenverbinders (102) im Inneren eines schützenden Gehäuses (147) nach Anbringen des Zwischenverbinders an dem Stromkabel und/oder den Schritt des Schützens des abgewinkelten Zwischenverbinders (102) gegenüber der Umgebung mit einer Muffe umfasst, die mittels Wärmeschrumpf- oder Kaltauftrag-Methoden oder durch Umwickeln aufgebracht wird.

## Revendications

1. Agencement de connecteur électrique permettant de relier un câble de puissance (112) à au moins un second câble (128), l'agencement de connecteur électrique (100) comprenant :
un connecteur intermédiaire coudé (102), le connecteur intermédiaire coudé (102) comprenant au moins un premier bras (122) et au moins un second bras (124), le premier bras (122) et le second bras (124) formant un angle de valeur non nulle différent de 180 °,
dans lequel le premier bras (122) comprend un premier élément de connexion de câble (106) et un second élément de connexion de câble (110) apparié pouvant être fixé au câble de puissance (112), et
le second bras (124) comprend un premier élément de connexion à contact glissant (126) qui est formé par une douille de connecteur autobloquant et un second élément de connexion à contact glissant (130) apparié formé par un boulon autobloquant et pouvant être fixé au second câble (128), le premier élément de connexion de câble (106) et le premier élément de connexion à contact glissant (126) étant reliés électriquement, et
dans lequel le connecteur intermédiaire coudé (102) comprend en outre un revêtement électriquement isolant (142) destiné à protéger le premier élément de connexion de câble (106) et le premier élément de connexion à contact glissant (126),
dans lequel le second élément de connexion de câble est formé en tant que cosse de connexion de câble (110) comportant une plage (108) en extrémité,
ledit premier élément de connexion de câble est un connecteur à vis (106) et il est formé comme un composant métallique intégré unique (150), le premier élément de connexion à contact glissant (126) étant autobloquant afin de fixer, au moyen d'une vis (162), la plage (108) de la cosse de connexion de câble (110) qui forme le second élément de connexion de câble, de sorte à ce que la cosse de connexion de câble (110) forme, avec l'axe central longitudinal (140) du boulon de connexion autobloquant, un angle de valeur non nulle différent de 180 °, et
dans lequel ledit boulon de connexion autobloquant (130) est, à l'état de montage final sur le premier élément de connexion à contact glissant (126) autobloquant, disposé de sorte à ce que l'axe central longitudinal (140) du boulon de connexion autobloquant (130) coupe la plage (108) de la cosse de connexion de câble (110), ou
dans lequel le connecteur à vis (106) est disposé de sorte à être éloigné de l'axe central longitudinal (140) du boulon de connexion autobloquant (130), à l'état de montage final sur le premier élément de connexion à contact glissant (126) autobloquant.

2. Agencement de connecteur électrique selon la revendication 1, dans lequel le premier élément de connexion à contact glissant (126) et le second élément de connexion à contact glissant (130), à l'état de montage final, sont immobilisés l'un à l'autre au moyen d'un mécanisme autobloquant (134).

3. Agencement de connecteur électrique selon la revendication 2, dans lequel le mécanisme autobloquant (134) comprend au moins un élément de connexion pouvant coulisser (132) disposé au niveau du premier ou du second élément à contact glissant dans le but d'interagir respectivement avec au moins une rainure correspondante disposée au niveau du second ou du premier élément de connexion à contact glissant.

4. Agencement de connecteur électrique selon l'une des revendications précédentes, comprenant en outre :
un élément d'entretoise (104) comportant un câble d'entretoise qui forme ledit second câble, le câble d'entretoise (128) étant connecté au premier élément de connexion à contact glissant (126) et pouvant être connecté à une armoire de distribution.

5. Agencement de connecteur électrique selon la revendication 1, dans lequel le premier bras (122) et le second bras (124) forment un angle d'environ 90 °.

6. Agencement de connecteur électrique selon la revendication 2, dans lequel le mécanisme autobloquant comprend au moins une bague thermoplastique de fixation (134) compressible radialement disposée au niveau du second élément de connexion autobloquant (130) dans le but d'interagir avec une seconde rainure (138) correspondante disposée au niveau du premier élément de connexion autobloquant (126).

7. Agencement de connecteur électrique selon l'une des revendications précédentes, dans lequel, au niveau d'au moins l'un des premiers bras (122), le revêtement isolant électriquement comporte une ouverture (148) destinée à procurer un accès au dit premier élément de connexion de câble (106) .

8. Procédé d'installation d'une armoire de distribution en utilisant un agencement de connecteur électrique (100) conforme à l'une des revendications 1 à 7, le procédé comprenant les étapes suivantes :
l'utilisation du câble de puissance (112) souterrain, le second élément de connexion de câble (110) étant fixé au câble,
la fixation du connecteur intermédiaire coudé (102) au second élément de connexion de câble (110),
la fixation d'au moins un second câble (128) comportant le second élément de connexion à contact glissant (130) de sorte à ce que les premier et second éléments de connexion à contact glissant soient reliés électriquement.

9. Procédé selon la revendication 8, dans lequel l'agencement de connecteur électrique (100) comprend en outre un élément d'entretoise (104) comportant un câble d'entretoise (128) qui forme ledit second câble et connectant le premier élément de connexion à contact glissant (126) à une armoire de distribution.

10. Procédé selon l'une des revendications 8 à 9, lors de l'utilisation de l'agencement de connecteur électrique (100) conforme aux revendications 2, 3 ou 6, dans lequel le mécanisme autobloquant comprend :
au moins un élément de connexion pouvant coulisser (132) disposé au niveau du premier ou du second élément de connexion autobloquant en vue d'interagir respectivement avec au moins une rainure correspondante disposée au niveau du second ou du premier élément de connexion autobloquant.

11. Procédé selon l'une des revendications 8 à 10, dans lequel ledit second élément de connexion autobloquant (130) de l'élément d'entretoise est inséré dans le premier élément de connexion autobloquant (126) dans une direction (164) orthogonale à l'axe longitudinal du câble de puissance (112).

12. Procédé selon l'une des revendications 8 à 11, comprenant en outre l'étape consistant à enfermer le connecteur intermédiaire coudé (102) à l'intérieur d'une enveloppe protectrice (147) après avoir fixé le connecteur intermédiaire au dit câble de puissance, et/ou l'étape consistant à protéger par rapport à l'environnement le connecteur intermédiaire coudé (102) avec un manchon installé par des techniques de thermoformage ou de froid ou bien par enrubannage.
